# EUROPÄISCHE PATENTANMELDUNG

(11) **EP 3 409 449 A1**
(43) Veröffentlichungstag der Anmeldung: **05.12.2018**
(21) Anmeldenummer: 18170045.1
(22) Anmeldetag: 30.04.2018
(51) Int. Cl.: B29C 65/20, E06B 3/96

(54) **VERFAHREN UND VORRICHTUNG ZUM VERSCHWEISSEN VON ZWEI HOHLEN PROFILSTÄBEN AUS KUNSTSTOFF**

(30) Priorität: 29.05.2017 DE 102017111606
(71) Anmelder: Stürtz Maschinenbau GmbH, 53577 Neustadt / Wied-Rott (DE)
(72) Erfinder: Wagner, Wladimir, 56581 Kurtscheid (DE)
(74) Vertreter: Wagner Albiger & Partner Patentanwälte mbB

(57) **Zusammenfassung**

Die Erfindung bezieht sich auf ein Verfahren zum Verschweißen von zwei hohlen Profilstäben (4) aus Kunststoff zur Bildung eines Fensterrahmens, bei dem die miteinander zu verbindenden Profilstäbe (4) durch Einfügen eines Schweißspiegels (3) zwischen deren Verbindungsflächen und Anpressen derselben an den Schweißspiegel (3) unter Bildung von äußeren und inneren Wulsten (8a, 8b) auf eine vorgegebene Temperatur erhitzt und nach dem Entfernen des Schweißspiegels (3) bei gleichzeitiger Vergrößerung des Schweißwulstes unter Druck zusammengefügt werden.

Um bei allen für die Herstellung von Fensterrahmen verwendeten Querschnitten der Profilstäbe (4) und den eingesetzten Kunststoffen im Bereich der Verbindungsstellen des fertigen Fensterrahmens an dessen Ober- bzw. Vorderseite und an dessen Unter- bzw. Rückseite eine Art Schattennut zu erreichen, werden nach dem Entfernen des Schweißspiegels (3) nur die an den Sichtflächen des späteren Fensterrahmens im Bereich der Verbindungsstellen der beiden Profilstäbe (4) entstandenen äußeren Wülste (8a) unter Bildung einer schrägen Kante geringfügig nach innen gedrückt und dann zusammen mit den inneren Wülsten (8b) entfernt und anschließend die Verbindungsflächen der beiden Profilstäbe (4) zusammengefügt.

## Beschreibung

Die Erfindung bezieht sich auf ein Verfahren zum Verschweißen von zwei hohlen Profilstäben aus Kunststoff zur Bildung eines Fensterrahmens, bei dem die miteinander zu verbindenden Profilstäbe durch Einfügen eines Schweißspiegels zwischen deren Verbindungsflächen und Anpressen derselben an den Schweißspiegel unter Bildung eines teilweise äußeren Schweißwulstes auf eine vorgegebene Temperatur erhitzt und nach dem Entfernen des Schweißspiegels bei gleichzeitiger Vergrößerung des Schweißwulstes unter Druck zusammengefügt werden sowie auf eine Vorrichtung zur Durchführung des Verfahrens.

Zur Herstellung von Fensterrahmen aus durchgehende Kammern aufweisenden Profilstäben aus Kunststoff sind Schweißvorrichtungen bekannt, mit denen - je nach Ausgestaltung der Fertigungsvorrichtung - eine Ecke, zwei Ecken oder alle vier Ecken eines Fensterrahmens gleichzeitig zusammengeschweißt werden können. Dabei besitzt jede Schweißvorrichtung für jede Ecke einen Schweißkopf mit einem beheizbaren Schweißspiegel sowie für jeden Profilstab eine Spanneinheit. Jede Spanneinheit weist dabei eine obere und eine untere Begrenzungsrampe auf, zwischen denen jeweils ein Profilstab gehalten ist.

Für den eigentlichen Schweiß- bzw. Fügevorgang werden zunächst die beiden Profilstäbe, die an jedem Ende etwa 3 mm länger sind als die Maße des fertigen Fensterrahmens, aufeinander ausgerichtet und in einer Lage gesichert, in der die beiden Verbindungsflächen so weit voneinander gehalten sind, dass der auf eine vorgegebene Temperatur erhitzte Schweißspiegel zwischen dieselben eingeführt werden kann. Sodann werden die Verbindungsflächen der beiden Profilstäbe gegen den Schweißspiegel gepresst und so weit angeschmolzen, dass sich die Länge der Profilstäbe um etwa 2 mm verringert. Dabei entsteht bei diesem Pressvorgang in allen Bereichen der Profilstäbe ein erster Teil einer sogenannten Schweißwulst. Danach werden die Profilstäbe kurzzeitig vom Schweißspiegel zurückgezogen, so dass derselbe wieder in seine Ausgangslage zurückkehren kann. Anschließend werden die erhitzten Verbindungsflächen der beiden Profilstäbe erneut gegeneinandergepresst, wobei sich der vorerwähnte Schweißwulst vergrößert und gleichzeitig die Länge der Profilstäbe weiter um etwa 1 mm verkürzt, so dass dieselben bereits an den geschweißten bzw. zusammengefügten Enden das für den Fensterrahmen vorgegebene Endmaß erreicht haben.

Die durch das Zusammenfügen der Profilstäbe im Bereich der Verbindungs-flächen entstandenen Schweißwulste sind nicht nur umlaufend außen, sondern auch an allen im Inneren der Profilstäbe befindlichen Stegen vorhanden. Diese Schweißwulste können teilweise scharfkantig sein und ergeben an den sichtbaren Flächen des späteren Fensterrahmens kein schönes Aussehen. Deshalb werden diese Schweißwulste zumindest an den sichtbaren Flächen des geschweißten bzw. zusammengefügten Fensterrahmens entfernt. Dies erfolgt mittels besonderer Messer und/oder Fräser an der Ober- bzw. Vorderseite und an der Unter- bzw. Rückseite des geschweißten Fensterrahmens in mindestens einem nachfolgenden, zusätzlichen Arbeitsvorgang, wobei meist eine sogenannte Schattennut entsteht. Durch diese zusätzlichen Arbeitsgänge erhöht sich nicht nur zwangsläufig die Zeit für die Fertigung eines Fensterrahmens, sondern es wird auch eine zusätzliche Vorrichtung benötigt. Darüber hinaus weist eine Schattennut eine gegenüber der sonstigen Oberfläche des Fensterrahmens etwas rauere Oberfläche auf, die die Ablage von Schmutzpartikeln begünstigt.

Um zumindest einen Teil des Aufwandes für die Beseitigung der sichtbaren und damit störenden Schweißraupen zu vermeiden und somit die Zeit für die Fertigung eines Fensterrahmens zu verringern, ist aus der deutschen Offenlegungsschrift 10 2015 013 439 ein Verfahren bekannt geworden, bei dem nach dem Entfernen des Schweißspiegels die an den Sichtflächen des späteren Fensterrahmens im Bereich der Verbindungsstellen der beiden Profilstäbe entstandenen äußeren Teile der Schweißwülste nach innen gepresst werden, danach der Schweißspiegel erneut zwischen die Verbindungsflächen der Profilstäbe bewegt wird und die Verbindungsflächen bei gleichzeitiger Verformung der nach innen gepressten Schweißwülste nacherhitzt werden und schließlich nach dem Entfernen des Schweißspiegels die Verbindungsflächen der beiden Profilstäbe zusammengefügt werden.

Dieses bekannte Verfahren bringt jedoch nicht bei allen für die Herstellung von Fensterrahmen verwendeten Querschnitten der Profilstäbe und den eingesetzten Kunststoffen den gewünschten Erfolg. Ferner wird es als nachteilig angesehen, dass im Bereich der Verbindungsstellen des fertigen Fensterrahmens an dessen Ober- bzw. Vorderseite und an dessen Unter- bzw. Rückseite eine meist vollkommen ebene Fläche vorhanden ist.

Der vorliegenden Erfindung liegt die Aufgabe zugrunde, ein Verfahren und eine dafür anwendbare Vorrichtung zum Verschweißen von zwei der Bildung eines Fensterrahmens dienenden Profilstäben aus Kunststoff anzugeben, welche bei allen für die Herstellung von Fensterrahmen verwendeten Querschnitten der Profilstäbe und den eingesetzten Kunststoffen anwendbar sind und durch die im Bereich der Verbindungsstellen des fertigen Fensterrahmens an dessen Ober- bzw. Vorderseite und an dessen Unter- bzw. Rückseite eine Art Schattennut entsteht.

Zur Lösung dieser Aufgabe wird gemäß der Erfindung bei einem Verfahren der eingangs beschriebenen Gattung vorgeschlagen, dass nach dem Entfernen des Schweißspiegels nur die an den Sichtflächen des späteren Fensterrahmens im Bereich der Verbindungsstellen der beiden Profilstäbe entstandenen äußeren Wülste unter Bildung einer schrägen Kante geringfügig nach innen gedrückt und dann zusammen mit den inneren Wülsten entfernt werden und dass anschließend die Verbindungsflächen der beiden Profilstäbe zusammengefügt werden. Unter einem solchen geringfügigen Drücken der äußeren Wülste nach innen wird in Abhängigkeit von den Materialstärken der üblicherweise als Hohlprofil ausgebildeten Profilstäbe ein Drücken um etwa 0,5 bis 1,5 mm verstanden.

Ein solches Verfahren ist bei allen für die Herstellung von Fensterrahmen verwendeten Querschnitten der Profilstäbe und den eingesetzten Kunststoffen anwendbar und es wird eine Art Schattennut erreicht, die das optische Aussehen des Fensterrahmens verbessert. An den sichtbaren Flächen des sind ebenfalls keine Wulste mehr vorhanden.

Die Erfindung wird nachfolgend anhand eines in einer Zeichnung in stark vereinfachter Weise und nicht maßstabsgerecht dargestellten Ausführungsbeispiels näher erläutert.

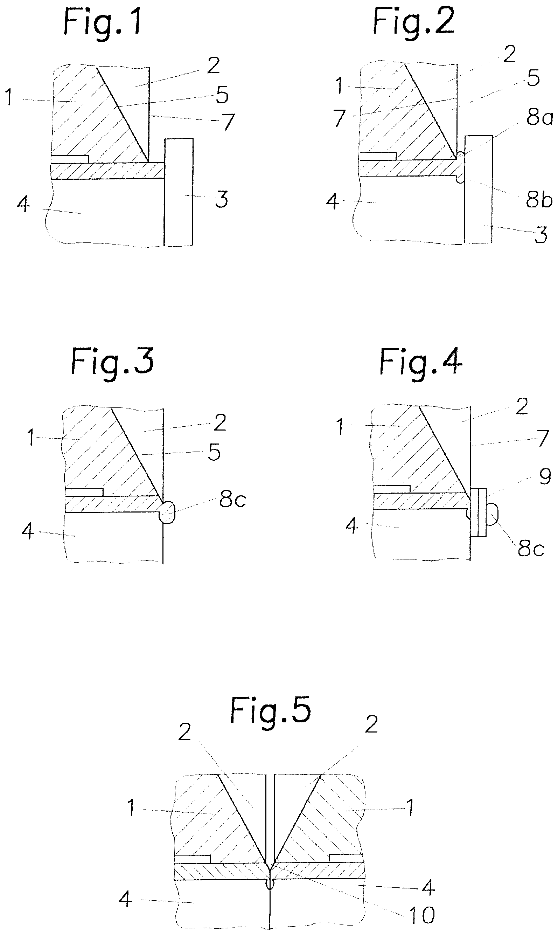

Dabei zeigen die Figuren 1 bis 5 nur ausschnittsweise die wesentlichen Teile einer Vorrichtung zur Durchführung der Erfindung in aufeinanderfolgenden Verfahrensschritten.

In den Figuren 1 bis 4 der Zeichnung sind von einer erfindungsgemäßen Vorrichtung zum Verschweißen von Profilstäben zur Bildung eines an sich bekannten Fensterrahmens nur eine sogenannte Begrenzungsrampe 1, ein Schieber 2 und ein Schweißspiegel 3 zu erkennen, die Bestandteile eines an sich bekannten und daher nicht dargestellten Schweißkopfes sind. Die gezeichnete Begrenzungsrampe 1 liegt an der Oberseite eines nur ausschnittsweise zu sehenden, hohlen Profilstabes 4 aus Kunststoff an, dessen beide Stirnflächen auf Gehrung geschnitten sind und dessen Inneres normalerweise durch entsprechend angeordnete Stege in mehrere unterschiedlich große und durchgehende Kammern unterteilt ist. An der in der Zeichnung nicht zu sehenden Unterseite des Profilstabes 4 befindet sich eine zweite, vorteilhaft identische und spiegelbildlich zur ersten Begrenzungsrampe 1 angeordnete Begrenzungsrampe 1, wobei der Profilstab 4 zwischen den beiden Begrenzungsrampen 1 eingespannt ist und mit seiner Stirnfläche um ein vorgegebenes Maß, es sind meist etwa 3 mm, über die schräg verlaufende Stirnfläche 5 der Begrenzungsrampe 1 hinausragt. Diese Stirnfläche 5 verläuft unter einem spitzen Winkel von etwa 45 bis 70°, vorteilhaft unter 60°. An dieser Stirnfläche 5 ist der einen keilförmigen Querschnitt und eine senkrecht zum Profilstab 4 verlaufende Stirnfläche 7 aufweisende Schieber 2 verschiebbar geführt, so dass hier zwischen der Stirnfläche 7 und der Grundfläche jeder Begrenzungsrampe 1 ein rechter oder annähernd rechten Winkel vorhanden ist.

Der vorerwähnte Schweißkopf nimmt nun, wie nur die Figur 5 erkennen lässt, einen zweiten Profilstab 4 auf, der in der bereits oben erläuterten Weise ebenfalls zwischen zwei Begrenzungsrampen 1 eingespannt ist und bei dem der Begrenzungsrampe 1 ebenfalls ein Schieber 2 zugeordnet ist. Diese Anordnung befindet sich bekanntlich spiegelbildlich auf der anderen Seite des Schweißspiegels 3. In Abhängigkeit von der Ausgestaltung der Schweißanlage kann dieselbe mit zwei, vier oder sechs Schweißköpfe bestückt sein.

Für die Einleitung des Schweiß- bzw. Fügevorganges wird nun der sich normalerweise außerhalb des Bereiches der Profilstäbe 4 befindliche und erhitzte Schweißspiegel 3 zwischen die Stirn- bzw. Verbindungsflächen der beiden Profilstäbe 4 eingeführt, wobei jede Begrenzungsrampe 1 zunächst einen Abstand von etwa 3 mm von dem Schweißspiegel 3 aufweist (Figur 1). Jetzt werden die Profilstäbe 4 mit einer vorgegebenen Kraft an den Schweißspiegel 3 angepresst. Dadurch werden die Stirn- bzw. Verbindungsflächen der beiden Profilstäbe 4 erhitzt und angeschmolzen. Da dabei die Größe der Anpresskraft der Profilstäbe 4 an den Schweißspiegel 3 beibehalten wird, verringert sich der Abstand zwischen jeder Begrenzungsrampe 1 und dem Schweißspiegel 3 und es bildet sich außerhalb und innerhalb der Wandung jedes Profilstabes 4 sowie an allen im Inneren der Profilstäbe 4 befindlichen Stegen ein Wulst 8a, 8b (Figur 2) aus, dessen Form unterschiedlich sein und von der vereinfacht gezeichneten Form abweichen kann. Sobald sich der Abstand zwischen der Begrenzungsrampe 1 und dem Schweißspiegel 3 um etwa 2/3 - das sind etwa 2 mm - verringert hat, wird die Anpresskraft zurückgenommen und die Profilstäbe 4 werden vom Schweißspiegel 3 zurückgezogen. Anschließend wird der Schweißspiegel 3 aus dem Bereich der Profilstäbe 4 entfernt.

Jetzt kommt der Schieber 2 zur Wirkung. Er wird über einen nicht gezeichneten Antrieb bekannter Bauart entlang der Stirnfläche 6 der Begrenzungsrampe 1 aus seiner Stellung gemäß den Figuren 1 und 2 in die Stellung der Figur 3 bewegt. In dieser Stellung befindet sich die vorteilhaft leicht abgerundete Spitze des Schiebers 2 etwa in der Mitte der Dicke der Außenwandung des Profilstabes 4. Bei dieser Bewegung des Schiebers 2 wird insbesondere der entstandene äußere und durch die zuvor erfolgte Erhitzung noch plastische Wulst 8a zwangsläufig, z.B. um etwa 1,1 mm nach innen bzw. nach unten gedrückt, wobei sich die beiden Schweißwulste 8a und 8b zu einem größeren Schweißwulst 8c vereinen, dessen Form ebenfalls nicht genau mit der gezeichneten Form übereinstimmt (Figur 3).

In einem nachfolgenden Arbeitsschritt wird ein beispielsweise auf einem nicht gezeichneten Schlitten gehaltenes Messer 9 als Trenneinrichtung senkrecht zur Zeichnungsebene entlang der Stirnfläche 7 des Schiebers 2 bewegt, wobei zumindest der größte Teil des Wulstes 8c eines Profilstabes 4 abgetrennt wird (Figur 4). Es ist vorteilhaft, wenn der nicht gezeichnete Schlitten noch ein weiteres Messer 9 aufnimmt, so dass an beiden miteinander zu verbindenden Stirnflächen der Profilstäbe 4 gleichzeitig der größte Teil der Wulste 8c abgetrennt wird. Somit sind beide Trenneinrichtungen einer Fensterecke auf einem gemeinsamen Schlitten geführt und beide Trenneinrichtungen können in nicht dargestellter Weise höheneinstellbar am Schlitten gehalten sein. Die abgetrennten Teile der Wulste 8c können jetzt beispielsweise mittels eines Luftstromes aus dem Bereich der miteinander zu verbindenden Profilstäbe 4 entfernt werden. Im Anschluss werden zunächst die beiden Schieber 2 so weit von den Profilstäben zurückbewegt, dass sie sich außerhalb der Wandung befinden, wie dies deutlich die Figur 5 erkennen lässt. Danach werden die sich noch im erhitzten und damit plastischen Zustand befindlichen und unter Gehrung verlaufenden Stirnflächen der beiden Profilstäbe 4 gegeneinandergepresst und verschweißt (Figur 5). Aus dieser Figur ist auch zu erkennen, dass im Bereich der Verbindungsstelle zwischen den beiden Profilstäben 4 an der Oberfläche eine kleine, V-förmigen Querschnitt aufweisende Nut 10 verbleibt. In Abhängigkeit von der Ausbildung der Spitze der Schieber 2 kann diese Nut 10 auch eine etwas andere Form aufweisen.

Es ist möglich, im Anschluss nach dem Entfernen der abgetrennten Wulste 8c den Schweißspiegel 3 erneut in den Bereich der beiden Profilstäbe 4 zu bewegen und die Profilstäbe 4 wieder gegen den Schweißspiegel 3 anzupressen. Dieser Pressvorgang wird jedoch nur kurzzeitig und mit äußerst geringer Anpresskraft durchgeführt, so dass sich dadurch die Länge der Profilstäbe 4 nur unwesentlich verkürzt, jedoch die Stirnflächen der Profilstäbe 4 nachgeheizt werden. Unter einem solchen kurzfristigen Pressvorgang ist eine Dauer von etwa 2 s bis 15 s, je nach Art und Materialstärke der Profilstäbe 4 zu verstehen.

Bekanntlich sind die Profilstäbe 4 aus Kunststoff zur Bildung eines Fensterrahmens an der oberen bzw. vorderen Fläche desselben selten vollkommen eben ausgebildet. Meist ist am inneren und/oder äußeren Rand eine Schräge oder eine Abrundung vorhanden. Um auch in diesen Bereichen sicher zu stellen, dass dort kein äußerer Wulst mehr entstehen wird, kann beispielsweise der Schieber 2 profiliert ausgebildet sein. Es ist möglich, mindestens zwei voneinander getrennte Schieber 2 vorzusehen, von denen der zweite Schieber 2 unter einem Winkel zum ersten Schieber 2 verläuft.

## Patentansprüche

1. Verfahren zum Verschweißen von zwei hohlen Profilstäben (4) aus Kunststoff zur Bildung eines Fensterrahmens, bei dem die miteinander zu verbindenden Profilstäbe (4) durch Einfügen eines Schweißspiegels (3) zwischen deren Verbindungsflächen und Anpressen derselben an den Schweißspiegel (3) unter Bildung von äußeren und inneren Wulsten (8a, 8b) auf eine vorgegebene Temperatur erhitzt und nach dem Entfernen des Schweißspiegels (3) bei gleichzeitiger Vergrößerung des Schweißwulstes unter Druck zusammengefügt werden, **dadurch gekennzeichnet, dass** nach dem Entfernen des Schweißspiegels (3) nur die an den Sichtflächen des späteren Fensterrahmens im Bereich der Verbindungsstellen der beiden Profilstäbe (4) entstandenen äußeren Wülste (8a) unter Bildung einer schrägen Kante geringfügig nach innen gedrückt und dann zusammen mit den inneren Wülsten (8b) entfernt werden und dass anschließend die Verbindungsflächen der beiden Profilstäbe (4) zusammengefügt werden.

2. Verfahren nach Anspruch 1, **dadurch gekennzeichnet, dass** nach dem Entfernen der inneren und äußeren Wülste (8a, 8b) der Schweißspiegel (3) kurzzeitig erneut zwischen die Verbindungsflächen der Profilstäbe (4) bewegt wird und die Verbindungsflächen nacherhitzt werden.

3. Vorrichtung zur Durchführung des Verfahrens nach Anspruch 1 oder 2, bestehend aus einem Schweißkopf mit einem Schweißspiegel (3) und zwei jeweils eine obere und eine untere Begrenzungsrampe aufweisenden und die beiden Profilstäbe (4) aufnehmenden sowie deren Verbindungsflächen gegen den Schweißspiegel (3) anpressenden Spanneinheiten, **dadurch gekennzeichnet, dass** im Bereich der einander zugewandten Stirnflächen jeder Begrenzungsrampe (1) mindestens ein senkrecht zur Sichtfläche des späteren Fensterrahmens bewegbarer Schieber (2) zum Verformen der Wulste (8a, 8b) zugeordnet ist.

4. Vorrichtung nach Anspruch 3, **dadurch gekennzeichnet, dass** die wirksame Stirnfläche (5) jeder Begrenzungsrampe (1) zur Grundfläche derselben unter einem Winkel von etwa 45 bis 70 ° verläuft.

5. Vorrichtung nach einem der Ansprüche 3 oder 4, **dadurch gekennzeichnet, dass** der Schieber (2) einen keilförmigen Querschnitt aufweist und seine freie Stirnfläche (7) zusammen mit der Grundfläche jeder Begrenzungsrampe (1) einen rechten oder annähernd rechten Winkel bildet.

6. Vorrichtung nach einem der Ansprüche 3 bis 5, **dadurch gekennzeichnet, dass** jeder Begrenzungsrampe (1) eine vorzugsweise als Messer (9) ausgebildete und parallel zur Oberfläche des späteren Fensterrahmens bewegbare Trenneinrichtung zugeordnet ist.

7. Vorrichtung nach Anspruch 6, **dadurch gekennzeichnet, dass** beide Trenneinrichtungen einer Fensterecke auf einem gemeinsamen Schlitten geführt sind.

8. Vorrichtung nach Anspruch 7 , **dadurch gekennzeichnet, dass** beide Trenneinrichtungen höheneinstellbar am Schlitten gehalten sind.
